# EUROPEAN PATENT APPLICATION

(11) **EP 2 871 220 A1**
(43) Date of publication of application: **13.05.2015**
(21) Application number: 13813947.2
(22) Date of filing: 04.07.2013
(51) Int. Cl.: C09J 7/00, B32B 27/00, B32B 27/18, C08K 3/04, C08L 33/06, C08L 101/12, C09J 4/00, C09J 9/02

(54) **PRESSURE-SENSITIVE ADHESIVE SHEET**

(30) Priority: 05.07.2012 JP 2012151711
(71) Applicant: LINTEC Corporation, Tokyo 173-0001 (JP)
(72) Inventor: OTAKA, Syo, Tokyo 173-0001 (JP); ONO, Yoshitomo, Tokyo 173-0001 (JP)
(74) Representative: Gille Hrabal
(86) International application number: PCT/JP2013/068441
(87) International publication number: WO 2014/007353

(57) **Abstract**

A pressure-sensitive adhesive sheet having a pressure-sensitive adhesive layer made of a pressure-sensitive adhesive composition containing a pressure-sensitive adhesive resin (A) and a conductive material (B), wherein a value of van der Waals force component γₛ^{d} of surface free energy of the pressure-sensitive adhesive composition excluding the conductive material (B) is 26.0 or less, has excellent adhesive force, and excels in an antistatic property and a conductive property because of low surface resistivity of the pressure-sensitive adhesive layer.

## Description

### Technical Field

The present invention relates to a pressure-sensitive adhesive sheet having a pressure-sensitive adhesive layer, more specifically, relates to a pressure-sensitive adhesive sheet that has low surface resistivity of a pressure-sensitive adhesive layer, and excels in an antistatic property and a conductive property.

### Background Art

Conventionally, a conductive pressure-sensitive adhesive sheet having a simple adhesion property has been used for various types of bonding, such as an electromagnetic shielding member of a container that houses electronic devices such as a computer and a communication device, an earthing conductor of an electric component or the like, and furthermore, a member for preventing ignition due to a spark generated from static electricity of friction electricity or the like.

As a pressure-sensitive adhesive composition used for the conductive pressure-sensitive adhesive sheet, in order to impart an antistatic property and a conductive property, one obtained by dispersing a conductive substance, for example, metal powder such as copper powder, silver powder, nickel powder, and aluminum powder, in a pressure-sensitive adhesive resin is heavily used.

For example, Patent Literature 1 discloses an antistatic pressure-sensitive adhesive tape intended to improve an antistatic property, an adhesive property, and a dust resistance property, and as a specific structure, discloses an antistatic pressure-sensitive adhesive tape having a first pressure-sensitive adhesive layer in which a conductive material is dispersed, on one surface or both surfaces of a base material, and a second pressure-sensitive adhesive layer not containing a conductive material and having a predetermined thickness, on the first pressure-sensitive adhesive layer.

### Citation List

### Patent Literature

Patent Literature 1: Japanese Patent Laid-Open No. 2008-55710

### Summary of Invention

### Technical Problem

Incidentally, in order to improve a conductive property of a pressure-sensitive adhesive layer in the above-described conductive pressure-sensitive adhesive sheet, a large amount of conductive substance is blended in the pressure-sensitive adhesive composition that is a formation material of the pressure-sensitive adhesive layer, and mutual contact between conductive substance particles needs to be dense.

However, when a large amount of conductive substance is blended in the pressure-sensitive adhesive composition, the adhesive force tends to decrease. In contrast, there is an inconsistent problem in that the conductive property decreases when the content of the conductive substance is reduced so as to increase the adhesive force.

With respect to the above-described problem, the antistatic pressure-sensitive adhesive tape described in Patent Literature 1 remains insufficient in that both the adhesive force and the conductive property are made to be improved concurrently. Moreover, the antistatic pressure-sensitive adhesive tape described in Patent Literature 1 needs to form two pressure-sensitive adhesive layers, and therefore, increases the number of steps and has a problem of poor productivity.

It is an object of the present invention to provide a pressure-sensitive adhesive sheet that has excellent adhesive force, has low surface resistivity of a pressure-sensitive adhesive layer, and excels in an antistatic property and a conductive property.

### Solution to Problem

The present inventors found that the above-described problem can be solved by, in a pressure-sensitive adhesive composition that is a formation material of a pressure-sensitive adhesive layer constituting a pressure-sensitive adhesive sheet, adjusting a value of van der Waals force component γₛ^{d} of surface free energy of the pressure-sensitive adhesive composition excluding a conductive material to be a specific value or less.

More specifically, the present invention provides the following [1] to [9].
[1] A pressure-sensitive adhesive sheet having a pressure-sensitive adhesive layer made of a pressure-sensitive adhesive composition containing a pressure-sensitive adhesive resin (A) and a conductive material (B), wherein a value of van der Waals force component γₛ^{d} of surface free energy of the pressure-sensitive adhesive composition excluding the conductive material (B) is 26.0 or less.
[2] The pressure-sensitive adhesive sheet according to the above-described [1], wherein the pressure-sensitive adhesive sheet is a pressure-sensitive adhesive sheet without a base material, or a pressure-sensitive adhesive sheet having a base material made of an insulating material.
[3] The pressure-sensitive adhesive sheet according to the above-described [1] or [2], wherein the pressure-sensitive adhesive resin (A) contains one or more resins selected from the group consisting of a (meth)acrylic acid ester resin, a silylated urethane resin, a styrene-isoprene-styrene copolymer (SIS) resin, a styrene-butadiene-styrene copolymer (SBS) resin, a styrene-block-(ethylene-co-butene)-block-styrene triblock copolymer (SEBS) resin, and a polyisobutylene-based resin, as a base compound resin (a).
[4] The pressure-sensitive adhesive sheet according to the above-described [3], wherein the pressure-sensitive adhesive resin (A) contains the (meth)acrylic acid ester resin as the base resin (a), and a content of a structural unit derived from a carboxy group-containing monomer contained in all structural units of the (meth)acrylic acid ester resin is 3.0 mass% or less.
[5] The pressure-sensitive adhesive sheet according to any one of the above-described [1] to [4], wherein the pressure-sensitive adhesive resin (A) further contains a tackifier (b).
[6] The pressure-sensitive adhesive sheet according to the above-described [5], wherein the tackifier (b) contains one or more selected from rosin-based resins, terpene-based resins excluding partially hydrogenated terpene-based resins, and hydrogenated petroleum resins.
[7] The pressure-sensitive adhesive sheet according to any one of the above-described [1] to [6], wherein the pressure-sensitive adhesive resin (A) contains the (meth)acrylic acid ester resin as the base resin (a), and a content of a structural unit derived from a hydroxyl group-containing monomer contained in all structural units of the (meth)acrylic acid ester resin is 0.1 to 30 mass%.
[8] The pressure-sensitive adhesive sheet according to any one of the above-described [1] to [7], wherein the conductive material (B) is a carbon nanomaterial having a diameter of 1 to 1,000 nm and a length of 10 nm to 200 µm.
[9] The pressure-sensitive adhesive sheet according to any one of the above-described [1] to [8], wherein a content of the conductive material (B) in the pressure-sensitive adhesive composition is 0.05 to 15 parts by mass with respect to 100 parts by mass of the pressure-sensitive adhesive resin (A).

### Advantageous Effects of Invention

The pressure-sensitive adhesive sheet of the present invention has excellent adhesive force, has low surface resistivity of a pressure-sensitive adhesive layer, and excels in an antistatic property and a conductive property.

### Brief Description of Drawing

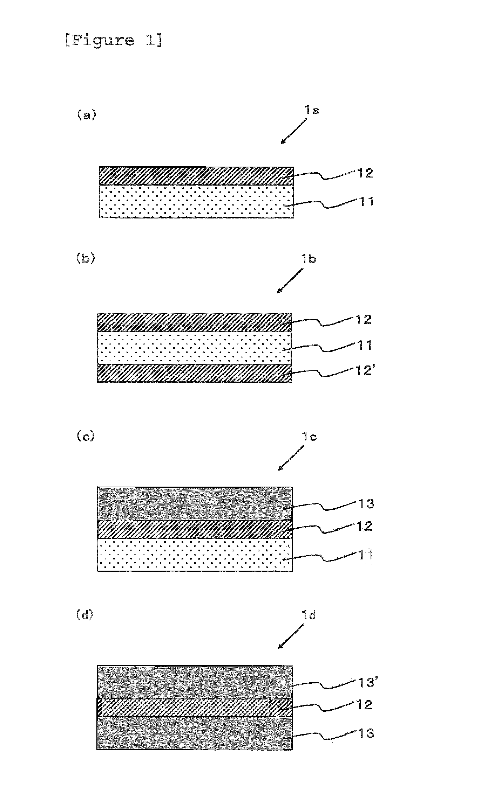

[Figure 1] Figure 1 is a cross-sectional view of a pressure-sensitive adhesive sheet showing one example of the structure of the pressure-sensitive adhesive sheet of the present invention.

### Modes For Carrying Out The Invention

In the following description, "weight-average molecular weight (Mw)" is a value in terms of standard polystyrene measured by the gel permeation chromatography (GPC) method, and specifically, a value measured based on a method described in Examples.

In addition, for example, "(meth)acrylic acid" is used as a term indicating both "acrylic acid" and "methacrylic acid", and it is much the same for other similar terms.

A pressure-sensitive adhesive sheet of the present invention has a pressure-sensitive adhesive layer made of a pressure-sensitive adhesive composition containing a pressure-sensitive adhesive resin (A) and a conductive material (B).

The structure of the pressure-sensitive adhesive sheet of the present invention is not particularly limited as long as it has the pressure-sensitive adhesive layer made of a pressure-sensitive adhesive composition.

Figure 1 is a cross-sectional view of a pressure-sensitive adhesive sheet showing the structure of the pressure-sensitive adhesive sheet of the present invention.

Examples of the structure of the pressure-sensitive adhesive sheet of the present invention include a pressure-sensitive adhesive sheet 1a with a base material, in which a pressure-sensitive adhesive layer 12 is formed on a base material 11, as in Figure 1(a).

In addition, it may be a structure such as a pressure-sensitive adhesive sheet 1b in which pressure-sensitive adhesive layers 12, 12' are formed on both surfaces of the base material 11 as in Figure 1(b), or a pressure-sensitive adhesive sheet 1c in which a release member 13 is laminated on the pressure-sensitive adhesive layer 12 formed on the base material 11 as in Figure 1(c). In addition, in the pressure-sensitive adhesive sheet 1b, release members may be further provided on the adhesive layers 12 and 12'.

Furthermore, it may be a pressure-sensitive adhesive sheet 1d without a base material, in which the pressure-sensitive adhesive layer 12 is sandwiched between the release member 13 and another release member 13' not using a base material, as in Figure 1(d). The materials of the release members 13, 13' of the pressure-sensitive adhesive sheet 1d may be the same or different, and are preferably materials adjusted such that peel force of the release member 13 and that of the release member 13' are different.

In addition, examples thereof can include a pressure-sensitive adhesive sheet obtained by winding one in which a pressure-sensitive adhesive layer is provided on one surface of a release member whose surface is subjected to peeling treatment, in a roll manner.

The thickness of the pressure-sensitive adhesive layer of the pressure-sensitive adhesive sheet of the present invention is arbitrarily adjusted depending on the intended use and the like, and is preferably 0.5 to 100 µm, more preferably 1 to 60 µm, and further preferably 3 to 40 µm. When it is 0.5 µm or more, good adhesive force can be obtained with respect to an adherend. In contrast, when it is 100 µm or less, the pressure-sensitive adhesive sheet can become advantageous in terms of productivity and easy to be handled.

### [Pressure-Sensitive Adhesive Composition]

The pressure-sensitive adhesive composition that is a formation material of the pressure-sensitive adhesive layer of the pressure-sensitive adhesive sheet of the present invention contains a pressure-sensitive adhesive resin (A) (hereinafter, also referred to as "(A) component") and a conductive material (B) (hereinafter, also referred to as "(B) component"), wherein a value of van der Waals force component γₛ^{d} of surface free energy of the pressure-sensitive adhesive composition excluding the conductive material (B) (hereinafter, also simply referred to as "value of van der Waals force component γₛ^{d}") is 26.0 or less.

The pressure-sensitive adhesive composition contains the pressure-sensitive adhesive resin (A) and the conductive material (B), and may contain other additives depending on the use of the pressure-sensitive adhesive sheet within a range not impairing the effects of the present invention.

It is to be noted that, in the present invention, the kind and the amount blended of each component such as the pressure-sensitive adhesive resin (A) contained in the pressure-sensitive adhesive composition are not limited as long as the pressure-sensitive adhesive composition is one in which the value of van der Waals force component γₛ^{d} of surface free energy of the pressure-sensitive adhesive composition excluding the (B) component is 26.0 or less.

Each component contained in the pressure-sensitive adhesive composition described below is one example of a component that is relatively easy to adjust the above-described value of van der Waals force component γₛ^{d} to 26.0 or less.

### [Pressure-Sensitive Adhesive Resin (A)]

The pressure-sensitive adhesive resin (A) contained in the pressure-sensitive adhesive composition used in the present invention may be made of a single resin or may be a mixture obtained by combining two or more resins.

The pressure-sensitive adhesive resin (A) mainly constitutes the pressure-sensitive adhesive layer formed from the pressure-sensitive adhesive composition, and preferably contains one or more resins selected from the group consisting of a (meth)acrylic acid ester resin, a silylated urethane resin, a styrene-isoprene-styrene copolymer (SIS) resin, a styrene-butadiene-styrene copolymer (SBS) resin, a styrene-block-(ethylene-co-butene)-block-styrene triblock copolymer (SEBS) resin, and a polyisobutylene-based resin, as a base compound resin (a) that is a resin directly contributing to an improvement in adhesive force.

These resins have excellent adhesive force and a low value of van der Waals force component γₛ^{d} in a single resin, and thus, are resins that are easy to adjust the value of van der Waals force component γₛ^{d} of the pressure-sensitive adhesive composition excluding the (B) component.

Moreover, it is preferable that the pressure-sensitive adhesive resin (A) further contain a tackifier (b). The tackifier (b) is one that is added for the purpose of playing an auxiliary role to the base resin (a) so as to further improve adhesive force of the pressure-sensitive adhesive sheet, but in the present invention, is added for the purpose of adjusting the value of van der Waals force component γₛ^{d} of the pressure-sensitive adhesive composition excluding the (B) component.

When the base resin (a) and the tackifier (b) are used in combination, the content of the base resin (a) in the (A) component is preferably 40 to 95 mass%, more preferably 45 to 90 mass%, and further preferably 50 to 85 mass%, and the content of the tackifier (b) is preferably 5 to 60 mass%, more preferably 10 to 55 mass%, and further preferably 15 to 50 mass%.

However, from the viewpoint of adjusting the value of van der Waals force component γₛ^{d} of the pressure-sensitive adhesive composition excluding the (B) component, the above-described contents of the base resin (a) and the tackifier (b) are preferably arbitrarily adjusted depending on the kind of the base resin (a) used.

In addition, it is preferable that the pressure-sensitive adhesive resin (A) further contain a cross-linking agent and a catalyst that plays a role as a hardening accelerator, depending on the kind of the base resin (a) used.

That is, the pressure-sensitive adhesive resin (A) preferably contains the tackifier (b), the cross-linking agent, and the catalyst as necessary, together with the base resin (a).

### <Base Resin (a)>

From the viewpoint of adjusting the value of van der Waals force component γₛ^{d} of the pressure-sensitive adhesive composition excluding the (B) component, the pressure-sensitive adhesive resin (A) preferably contains one or more resins selected from the group consisting of a (meth)acrylic acid ester resin, a silylated urethane resin, a styrene-isoprene-styrene copolymer (SIS) resin, a styrene-butadiene-styrene copolymer (SBS) resin, a styrene-block-(ethylene-co-butene)-block-styrene triblock copolymer (SEBS) resin, and a polyisobutylene-based resin, more preferably contains one or more resins selected from the group consisting of a (meth)acrylic acid ester resin, a silylated urethane resin, and a polyisobutylene-based resin, and further preferably contains a (meth)acrylic acid ester resin and/or a silylated urethane resin, as the base resin (a).

The details of the (meth)acrylic acid ester resin, the silylated urethane resin, and the polyisobutylene-based resin are as follows.

### ((Meth)acrylic Acid Ester Resin)

The (meth)acrylic acid ester resin is preferably a resin containing a structural unit (p1) derived from an alkyl (meth)acrylate monomer having 4 or more carbon atoms (hereinafter, also referred to as "monomer (p1)").

From the viewpoint of improving adhesive force of the pressure-sensitive adhesive sheet, the number of carbon atoms of an alkyl group of the monomer (p1) is preferably 4 to 20, more preferably 4 to 12, and further preferably 4 to 6. Moreover, the alkyl group of the monomer (p1) may be straight-chain or branched-chain.

Examples of the monomer (p1) include butyl (meth)acrylates such as n-butyl (meth)acrylate and isobutyl (meth)acrylate, pentyl (meth)acrylate, hexyl (meth)acrylate, 2-ethylhexyl (meth)acrylate, isooctyl (meth)acrylate, lauryl (meth)acrylate, and stearyl (meth)acrylate.

It is to be noted that these monomers (p1) may be used singly or in combination of two or more thereof.

Among them, from the viewpoint of improving adhesive force of the pressure-sensitive adhesive sheet, butyl (meth)acrylates are preferable, and n-butyl (meth)acrylate is more preferable.

From the viewpoint of further improving adhesive force of the pressure-sensitive adhesive sheet, the (meth)acrylic acid ester resin is preferably a resin further containing a structural unit (p2) derived from a functional group-containing monomer (p2) (hereinafter, also referred to as "monomer (p2)") together with the structural unit (p1).

It is to be noted that the term "functional group" in "functional group-containing monomer (p2)" here indicates a functional group that can react with a cross-linking agent described below to be the origin of cross-linkage or a functional group having a cross-linkage facilitation effect.

Examples of the functional group of the monomer (p₂) include a hydroxyl group, a carboxy group, an amino group, and an epoxy group. Among them, from the viewpoint of reactivity with a cross-linking agent, a carboxy group or a hydroxyl group is preferable.

Examples of the monomer (p2) include a hydroxyl group-containing monomer, a carboxy group-containing monomer, an amino group-containing monomer, and an epoxy group-containing monomer. It is to be noted that these monomers (p2) may be used singly or in combination of two or more thereof.

Among them, a hydroxyl group-containing monomer and a carboxy group-containing monomer are preferable.

Examples of the hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; and unsaturated alcohols such as vinyl alcohol and allyl alcohol.

Examples of the carboxy group-containing monomer include ethylenic unsaturated monocarboxylic acids such as (meth)acrylic acid and crotonic acid; ethylenic unsaturated dicarboxylic acids such as fumaric acid, itaconic acid, maleic acid, and citraconic acid, and anhydrides thereof; and 2-carboxyethyl (meth)acrylate.

When the (meth)acrylic acid ester resin is a resin containing the structural units (p1) and (p2), in all structural units of the (meth)acrylic acid ester resin, the content of the structural unit (p1) is preferably 40 to 99.9 mass%, more preferably 60 to 99 mass%, and further preferably 70 to 98 mass%, and the content of the structural unit (p2) is preferably 0.1 to 30 mass%, more preferably 0.15 to 20 mass%, and further preferably 0.2 to 10 mass%.

Moreover, the above-described (meth)acrylic acid ester resin may contain a structural unit derived from other monomer other than the above-described structural units (p1) and (p2) within a range satisfying the above-described content rate of the structural units (p1) and (p2).

The other monomer can be selected from monomers that can copolymerize with an acrylic-based monomer, and examples thereof include alkyl (meth)acrylate monomers having an alkyl group having 1 to 3 carbon atoms, such as methyl (meth)acrylate, ethyl (meth)acrylate, and propyl (meth)acrylate; olefins such as ethylene, propylene, and isobutylene; halogenated olefins such as vinyl chloride and vinylidene chloride; diene-based monomers such as butadiene, isoprene, and chloroprene; styrene, α-methylstyrene, vinyl toluene, vinyl formate, vinyl acetate, acrylonitrile, (meth)acrylamide, (meth)acrylonitrile, (meth)acryloylmorpholine, and N-vinylpyrrolidone.

The weight-average molecular weight (Mw) of the (meth)acrylic acid ester resin is preferably 250,000 to 1,500,000, more preferably 350,000 to 1,300,000, further preferably 450,000 to 1,100,000, and still further preferably 650,000 to 1,050,000.

### (Silylated Urethane Resin)

The silylated urethane resin is preferably a resin having a urethane bond and/or a urea bond at the main chain or the side chain, and having hydrolyzable silyl groups represented by the following general formula (1) at both terminals of the main chain.

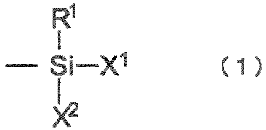

In the above general formula (1), X¹ to X² are each independently a hydroxy group or an alkoxy group, and R¹ is an alkyl group having 1 to 20 carbon atoms. The alkyl group may be straight-chain or branched-chain.

Since the silylated urethane resin has the hydrolyzable silyl groups represented by the above general formula (1) at the terminals, a three-dimensional network structure can be effectively formed by hydrolysis dehydration condensation between the silylated urethane resins, and adhesive force can be improved.

In the general formula (1), from the viewpoint of reactivity of hydrolysis dehydration condensation, the number of carbon atoms of the alkyl group represented by R¹ is preferably 1 to 12, more preferably 1 to 5, and further preferably 1 to 3.

Moreover, in the general formula (1), when X¹ and X² are alkoxy groups, from the viewpoint of reactivity of hydrolysis dehydration condensation, the number of carbon atoms of the alkoxy groups is preferably 1 to 12, more preferably 1 to 5, and further preferably 1 to 3.

The weight-average molecular weight (Mw) of the silylated urethane resin is preferably 1,000 to 300,000, more preferably 5,000 to 200,000, further preferably 10,000 to 150,000, and still further preferably 20,000 to 100,000.

### (Polyisobutylene-Based Resin)

The polyisobutylene-based resin used in the present invention is a resin having a polyisobutylene skeleton at the main chain or the side chain, and specifically, a resin having the following structural unit (α).

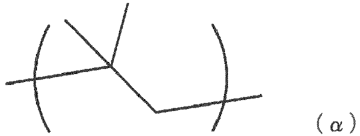

Examples of the polyisobutylene-based resin include polyisobutylene that is a homopolymer of isobutylene, a copolymer of isobutylene and isoprene, a copolymer of isobutylene and n-butene, a copolymer of isobutylene and butadiene, and halogenated butyl rubbers obtained by bromizing or chlorinating these copolymers.

These polyisobutylene-based resins may be used singly or in combination of two or more thereof.

It is to be noted that, when the polyisobutylene-based resin is a copolymer, the structural unit made of isobutylene shall be most contained among all structural units.

The content of the structural unit made of isobutylene with respect to the all structural units of the polyisobutylene-based resin is preferably 80 to 100 mass%, more preferably 90 to 100 mass%, further preferably 95 to 100 mass%, and still further preferably 98 to 100 mass%.

Examples of a synthesis method of the polyisobutylene-based resin include a method of polymerizing a monomer component such as isobutylene in the presence of a Lewis acid catalyst such as aluminum chloride and boron trifluoride.

Moreover, a commercial product can be used as the polyisobutylene-based resin. Examples of the commercial product include Vistanex (manufactured by Exxon Chemical Co.), Hycar (manufactured by Goodrich), and Oppanol (manufactured by BASF).

It is to be noted that the polyisobutylene-based resin used in the present invention may be a polyisobutylene-based resin having a polymerizable double bond at the terminal of the resin or the interior of the molecule, but from the viewpoint of improving durability and weatherability of the pressure-sensitive adhesive layer formed from the pressure-sensitive adhesive composition, one containing the structural unit made of isobutylene, which does not leave the polymerizable double bond at the main chain or the side chain, in a large amount, by which the polymerizable double bond disappears when producing the resin and a dense molecular structure can be formed, is preferable.

The content of the structural unit made of isobutylene, which does not leave the polymerizable double bond at the main chain or the side chain, with respect to the all structural units of the polyisobutylene-based resin is preferably 80 to 100 mass%, more preferably 90 to 100 mass%, further preferably 95 to 100 mass%, and still further preferably 98 to 100 mass%.

From the viewpoint of a balance between cohesive force and wettability against an adherend, the weight-average molecular weight (Mw) of the polyisobutylene-based resin used in the present invention is preferably 20,000 to 800,000, more preferably 30,000 to 550,000, further preferably 50,000 to 450,000, and still further preferably 100,000 to 400,000.

When the weight-average molecular weight is 20,000 or more, the cohesive force of the pressure-sensitive adhesive composition is improved, and thus, the pressure-sensitive adhesive sheet which excels in retention force can be formed. Furthermore, an adverse effect to contaminate the adherend can be prevented.

In contrast, when the weight-average molecular weight is 800,000 or less, flexibility and fluidity of the pressure-sensitive adhesive composition to be obtained become good, and the pressure-sensitive adhesive sheet which excels in wettability with the adherend can be formed. Furthermore, when preparing the pressure-sensitive adhesive composition, solubility against a solvent can be made to be good.

From the viewpoint of adjusting the value of van der Waals force component γₛ^{d} of the pressure-sensitive adhesive composition excluding the (B) component, the polyisobutylene-based resin used in the present invention is preferably used by combining a polyisobutylene-based resin having a high weight-average molecular weight and a polyisobutylene-based resin having a low weight-average molecular weight.

More specifically, the polyisobutylene-based resin used in the present invention preferably contains a polyisobutylene-based resin having a weight-average molecular weight of 270,000 to 800,000 (α1) (hereinafter, also referred to as "PIB-based resin (α1)") and a polyisobutylene-based resin having a weight-average molecular weight of 30,000 to 250,000 (α2) (hereinafter, also referred to as "PIB-based resin (α2)").

The PIB-based resin (α1) having a high weight-average molecular weight contributes to both an improvement in durability and weatherability of the pressure-sensitive adhesive layer formed from the pressure-sensitive adhesive composition, and an improvement in retention force and adhesive force of the pressure-sensitive adhesive sheet.

In contrast, the PIB-based resin (α2) having a low weight-average molecular weight is well compatible with the PIB-based resin (α1) and can moderately plasticize the PIB-based resin (α1), thereby increasing the wettability against the adherend of the pressure-sensitive adhesive layer made of the pressure-sensitive adhesive composition, and adhesive properties, flexibility, retention force and the like of the pressure-sensitive adhesive sheet to be obtained can be improved.

The weight-average molecular weight of the PIB-based resin (α1) is preferably 270,000 to 800,000, more preferably 300,000 to 600,000, further preferably 320,000 to 450,000, and still further preferably 330,000 to 400,000.

When the weight-average molecular weight of the PIB-based resin (α1) is 270,000 or more, the cohesive force of the pressure-sensitive adhesive composition can be sufficiently improved, and the pressure-sensitive adhesive sheet which excels in adhesive force can be formed. Furthermore, concern about contamination of the adherend can be resolved.

In contrast, when the weight-average molecular weight of the PIB-based resin (α1) is 800,000 or less, an adverse effect of lowering flexibility and fluidity due to too high cohesive force of the pressure-sensitive adhesive composition can be avoided, and wettability with the adherend of the pressure-sensitive adhesive layer made of the composition can be made to be good. Furthermore, when preparing the pressure-sensitive adhesive composition, solubility against a solvent can be made to be good.

The weight-average molecular weight of the PIB-based resin (α2) is preferably 20,000 to 250,000, more preferably 80,000 to 230,000, more preferably 140,000 to 220,000, and further preferably 180,000 to 210,000.

When the weight-average molecular weight is 20,000 or more, in the pressure-sensitive adhesive layer formed from the pressure-sensitive adhesive composition, an adverse effect of contamination of the adherend due to separation of the PIB-based resin (α2) as a low-molecular component can be avoided, and furthermore, effects on physical properties, such as an increase in the amount of outgas generated, which is generated under high temperature, can also be avoided.

In contrast, when it is 250,000 or less, the PIB-based resin (α1) can be sufficiently plasticized, and the wettability with the adherend of the pressure-sensitive adhesive layer to be formed can be made to be good.

From the viewpoint of adjusting the value of van der Waals force component γₛ^{d} of the pressure-sensitive adhesive composition excluding the (B) component, the content ratio of the PIB-based resin (α2) with respect to 100 parts by mass of the PIB-based resin (α1) is preferably 5 to 55 parts by mass, more preferably 6 to 40 parts by mass, further preferably 7 to 30 parts by mass, and still further preferably 8 to 20 parts by mass.

It is to be noted that each of the above-described PIB-based resins (α1) and (α2) may be used singly or in combination of two or more thereof.

### <Tackifier (b)>

In the present invention, from the viewpoints of improving adhesive force of the pressure-sensitive adhesive sheet and adjusting the value of van der Waals force component γₛ^{d} of the pressure-sensitive adhesive composition excluding the (B) component, it is preferable that the pressure-sensitive adhesive resin (A) further contain the tackifier (b).

Examples of the tackifier (b) include rosin-based resins such as a rosin resin, a rosin phenol resin, and an ester compound thereof; hydrogenated rosin-based resins obtained by hydrogenating these rosin-based resins; terpene-based resins such as a terpene resin, a terpene phenol resin, and an aromatic modified terpene resin; hydrogenated terpene resins obtained by hydrogenating these terpene-based resins; and hydrogenated petroleum resins.

It is to be noted that the hydrogenated petroleum resins are those obtained by hydrogenating petroleum resins and include not only fully hydrogenated resins but also partially hydrogenated resins having different hydrogenation ratios.

Moreover, in the present invention, the petroleum resins are characterized by being resins derived from petroleum and are the concept excluding resins derived from living bodies, such as hydrogenated terpene-based resins, hydrogenated rosin-based resins, hydrogenated rosin ester-based resins, disproportionated rosins, and disproportionated rosin ester-based resins.

Specific examples of the hydrogenated petroleum resins include C5-based petroleum resins obtained by copolymerizing C5 fractions such as pentene, isoprene, piperine, and 1,3-pentadiene generated by thermal decomposition of petroleum naphtha, and hydrogenated resins of the C5-based petroleum resins; C9-based petroleum resins obtained by copolymerizing C9 fractions such as indene, vinyl toluene, and α- or β-methylstyrene generated by thermal decomposition of petroleum naphtha, and hydrogenated resins of the C9-based petroleum resins; and hydrogenated resins of copolymer petroleum resins of these C5 fractions and C9 fractions.

Among them, from the viewpoints of improving adhesive force of the pressure-sensitive adhesive sheet and adjusting the value of van der Waals force component γₛ^{d} of the pressure-sensitive adhesive composition excluding the (B) component, it is preferable to contain one or more selected from rosin-based resins, terpene-based resins excluding partially hydrogenated terpene-based resins, and hydrogenated petroleum resins, and it is more preferable to contain at least one kind of rosin-based resins and terpene-based resins excluding partially hydrogenated terpene-based resins.

The softening point of the tackifier (b) is preferably 60 to 170°C, more preferably 65 to 160°C, and further preferably 70 to 150°C.

It is to be noted that the "softening point" is a value measured in conformity with JIS K 2531.

### <Cross-Linking Agent>

When the above-described resin having a functional group, such as the above-described (meth)acrylic acid ester resin having the structural unit (p2) derived from the functional group-containing monomer (p2), is contained in the pressure-sensitive adhesive resin (A), it is preferable that the pressure-sensitive adhesive resin (A) further contain a cross-linking agent. The cross-linking agent reacts with the functional group of the above-described resin to crosslink between the resins.

Examples of the cross-linking agent include isocyanate-based cross-linking agents such as tolylene diisocyanate, hexamethylene diisocyanate, and adducts thereof; epoxy-based cross-linking agents such as ethylene glycol glycidyl ether; aziridine-based cross-linking agents such as hexa[1-(2-methyl)-aziridinyl]triphosphatriazine; and chelate-based cross-linking agents such as an aluminum chelate. These cross-linking agents may be used singly or in combination of two or more thereof.

Among them, from the viewpoints of increasing cohesive force to improve adhesive force, easy availability and the like, isocyanate-based cross-linking agents are preferable.

The amount of the cross-linking agent blended is arbitrarily adjusted depending on the number of functional groups in the structure of the resin contained in the pressure-sensitive adhesive resin (A), and from the viewpoint of accelerating a cross-linking reaction, it is preferably 0.01 to 10 parts by mass, more preferably 0.03 to 7 parts by mass, and further preferably 0.05 to 4 parts by mass with respect to 100 parts by mass of the above-described resin having a functional group, such as the (meth)acrylic acid ester resin.

### <Catalyst (Hardening Accelerator)>

When the silylated urethane resin is contained in the pressure-sensitive adhesive resin (A), from the viewpoints of accelerating a cross-linking reaction between silyl groups of the silylated urethane resin and improving adhesive force, it is preferable that the pressure-sensitive adhesive resin (A) further contain a catalyst that plays a role as a hardening accelerator.

From the viewpoints of being easy to control a crosslink density and improving adhesive force and cohesive force, the catalyst is preferably at least one selected from the group consisting of an aluminum-based catalyst, a titanium-based catalyst, a zirconium-based catalyst, and a boron trifluoride-based catalyst.

The aluminum-based catalyst is preferably an aluminum alkoxide, an aluminum chelate, and aluminum chloride (III).

The titanium-based catalyst is preferably a titanium alkoxide, a titanium chelate, and titanium chloride (IV).

The zirconium-based catalyst is preferably a zirconium alkoxide, a zirconium chelate, and zirconium chloride (IV).

The boron trifluoride-based catalyst is preferably an amine complex and an alcohol complex of boron trifluoride.

From the viewpoint of a catalytic action, the amount of the catalyst blended is preferably 0.001 to 10 parts by mass, more preferably 0.01 to 8 parts by mass, and further preferably 0.03 to 5 parts by mass with respect to 100 parts by mass of the silylated urethane resin.

### [Conductive Material (B)]

The conductive material (B) used in the present invention is not particularly limited as long as it is a material having a conductive property, but from the viewpoint of effectively lowering surface resistivity of the pressure-sensitive adhesive layer of the pressure-sensitive adhesive sheet, it is preferably a carbon nanomaterial.

The carbon nanomaterial is made of a substance including a graphite sheet having a six-membered ring array structure as a main structure, may contain other elements other than carbon, such as boron and nitrogen, and may be an endohedral form by other substance.

Examples of the carbon nanomaterial include a carbon nanotube, a carbon nanofiber, a carbon nanohorn, a carbon nanocone, and a fullerene.

These carbon nanomaterials can be used singly or in combination of two or more thereof.

It is to be noted that the carbon nanotube is a tubular carbon polyhedron having a structure in which a graphite sheet having a carbon six-membered ring structure as a main structure is closed in a cylindrical shape.

As the carbon nanotube, there are a single-walled carbon nanotube having a structure in which a one-layer graphite sheet is closed in a cylindrical shape, a double-walled carbon nanotube having a structure in which a two-layer graphite sheet is closed in a cylindrical shape, and a multi-walled carbon nanotube having a multilayer structure in which a three-layer or more graphite sheet is closed in a concentric fashion, and two or more of them can be used concurrently.

The diameter (fiber diameter) of the carbon nanomaterial is preferably 1 to 1,000 nm, more preferably 3 to 500 nm, and further preferably 5 to 100 nm.

The length (fiber length) of the carbon nanomaterial is preferably 10 nm to 200 µm, more preferably 50 nm to 100 µm, and further preferably 100 nm to 50 µm.

From the viewpoint of lowering surface resistivity of the pressure-sensitive adhesive layer to be formed, the aspect ratio of the carbon nanomaterial is preferably 10 to 10,000, more preferably 50 to 7,000, further preferably 200 to 5,000, further preferably 300 to 3,500, and still further preferably 400 to 2,000.

It is to be noted that the above-described values of the average diameter, average length, and aspect ratio of the carbon nanomaterial indicate values measured based on a method described in Examples.

It is to be noted that, from the viewpoint of effectively lowering surface resistivity of the pressure-sensitive adhesive layer by maintaining a state where the conductive materials are close to each other in the pressure-sensitive adhesive layer, the above-described conductive material (B) is preferably contained in the pressure-sensitive adhesive composition in a state where, in a solvent, the conductive materials are close to each other without bias throughout the whole of the pressure-sensitive adhesive layer.

Examples of the solvent include water and an organic solvent, and an organic solvent is preferable. Examples of the organic solvent include water, methyl ethyl ketone, acetone, ethyl acetate, tetrahydrofuran, dioxane, cyclohexane, n-hexane, toluene, xylene, n-propanol, and isopropanol.

A dispersion liquid of the conductive material can be obtained by adding the conductive material to the above-described solvent, and then, applying an ultrasonic wave and the like thereto.

The content of the conductive material (B) in the pressure-sensitive adhesive composition is preferably 0.05 to 15 parts by mass, more preferably 0.1 to 10 parts by mass, and further preferably 0.5 to 5 parts by mass with respect to 100 parts by mass of the pressure-sensitive adhesive resin (A). When the content is 0.05 parts by mass or more, the surface resistivity of the pressure-sensitive adhesive layer to be formed can be lowered. In contrast, when the content is 15 parts by mass or less, the pressure-sensitive adhesive sheet having good adhesive force can be formed.

### [Other Additives]

The pressure-sensitive adhesive composition may contain other additives depending on the use of the pressure-sensitive adhesive sheet within a range not impairing the effects of the present invention. Examples of the other additives include an ultraviolet absorbing agent, an antioxidizing agent, a softener (plasticizer), a filler, a rust-preventive agent, a pigment, and a dye.

When these additives are blended, the amount of the additives blended is preferably 0.01 to 6 parts by mass with respect to 100 parts by mass of the pressure-sensitive adhesive resin (A).

Moreover, the pressure-sensitive adhesive composition may be the form of a solution of the pressure-sensitive adhesive composition by further being diluted with an organic solvent so as to make it easy to be applied on a base material or a release sheet and to improve workability.

Examples of the organic solvent include methyl ethyl ketone, acetone, ethyl acetate, tetrahydrofuran, dioxane, cyclohexane, n-hexane, toluene, xylene, n-propanol, and isopropanol.

It is to be noted that, as these organic solvents, the organic solvent used during preparing the pressure-sensitive adhesive resin (A) may be directly used, or one or more organic solvents other than the organic solvent used during the preparation may be added such that the pressure-sensitive adhesive solution can be uniformly applied.

The organic solvent is preferably blended such that the solid content concentration of the pressure-sensitive adhesive solution is preferably 5 to 60 mass%, more preferably 10 to 45 mass%, and further preferably 15 to 30 mass%. When the solid content concentration is 10 mass% or more, it is sufficient as the amount of the solvent used, and efficiency of application and drying when being applied on a base material or the like is improved. In contrast, when the solid content concentration is 60 mass% or less, viscosity becomes appropriate, and application work becomes easy.

### [Value of van der Waals Force Component γₛ^{d} of Surface Free Energy of Pressure-Sensitive Adhesive Composition excluding (B) Component]

In the present invention, the value of van der Waals force component γₛ^{d} of surface free energy of the pressure-sensitive adhesive composition excluding the (B) component is measured using a test sample obtained by forming only the pressure-sensitive adhesive composition excluding the (B) component into a sheet shape. Specifically, the value of van der Waals force component γₛ^{d} of surface free energy is a value obtained by, after a lapse of three hours from the formation of the above-described test sample into the sheet shape, dropping three kinds of solvents (pure water, diiodomethane, and 1-bromonaphthalene) onto the surface of the test sample, measuring a static contact angle for each, and calculating van der Waals force component γₛ^{d} of surface free energy γₛ^{total} of the pressure-sensitive adhesive resin by the Kitazaki-Hata method based on the measured value, and more specifically, indicates a value measured by a method described in Examples.

It is to be noted that, when the pressure-sensitive adhesive composition is diluted with an organic solvent, the organic solvent is removed during the formation of the sample, and thus, presence or absence of dilution of the organic solvent does not affect the value of van der Waals force component γₛ^{d} of surface free energy.

Just for reference, general values of van der Waals force component γₛ^{d} of surface free energy of respective various resins, which are measured based on the method described in Examples below, are shown in Table 1.

**[Table 1]**

| Material | van der Waals Force Component γₛ^{d} of Surface Free Energy |
|---|---|
| Polyacrylic Acid | 42-46 |
| Polyacetal Resin | 41-45 |
| Polycarbonate Resin | 40-44 |
| Polystyrene Resin | 40-44 |
| Polyvinyl Chloride Resin | 40-44 |
| Nylon 6 | 40-44 |
| Phenol Resin | 39-43 |
| Polymethacrylic Acid Resin | 39-43 |
| Polyvinyl Alcohol Resin | 38-42 |
| Nylon 6,6 | 38-42 |
| Polyether Ether Ketone Resin | 37-41 |
| Acrylonitrile-Butadiene-Styrene Copolymer Resin | 37-41 |
| Polyetherimide Resin | 36-40 |
| Melamine Resin | 36-40 |
| Epoxy Resin | 35-39 |
| Stainless | 33-37 |
| Glass | 32-36 |
| Polyethylene Resin | 31-35 |
| Polyvinylidene Fluoride Resin | 31-35 |
| Polypropylene Resin | 31-35 |
| High-Density Polyethylene Resin | 28-32 |
| Urethane Resin (Structural Unit Polycaprolactam) | 24-28 |
| Urethane Resin (Structural Unit Polypropylene Glycol) | 22-26 |
| Urethane Resin (Structural Unit Polytetramethylene Glycol) | 11-15 |

In the present invention, the value of van der Waals force component γₛ^{d} of surface free energy of the pressure-sensitive adhesive composition excluding the (B) component is 26.0 or less, preferably 25.0 or less, more preferably 24.0 or less, further preferably 23.5 or less, and still further preferably 23.0 or less.

When the value of van der Waals force component γₛ^{d} exceeds 26.0, the surface resistivity of the formed pressure-sensitive adhesive layer tends to increase, and furthermore, a decrease in adhesive force may be produced.

In addition, the value of van der Waals force component γₛ^{d} is preferably 1.0 or more, more preferably 10.0 or more, and further preferably 15.0 or more.

The value of van der Waals force component γₛ^{d} of the pressure-sensitive adhesive composition excluding the (B) component can be adjusted by arbitrarily selecting the kinds and various physical property values of the base resin (a) and the tackifier (b) to be used.

That is, the value of van der Waals force component γₛ^{d} is considered to depend on the kind of an originating monomer constituting the base resin (a) and the content ratio of a structural unit derived from the monomer, the kind of a functional group in the base resin (a), the weight-average molecular weight of the base resin (a), the kind of the tackifier (b), the softening point of the tackifier (b), the specific combination of the base resin (a) and the tackifier (b), the contents of the base resin (a) and the tackifier (b) and the like.

It is to be noted that the value of van der Waals force component γₛ^{d} changes somewhat by blending the cross-linking agent, the catalyst, and the above-described additives, but does not greatly change if the amount of each additive blended is within the above-described range.

More specifically, the value of van der Waals force component γₛ^{d} can be adjusted in consideration of the following factors. It is to be noted that items exemplified here are just an example, and in the present invention, a means for adjusting the value of van der Waals force component γₛ^{d} is not limited to the following items.

When a partially hydrogenated terpene-based resin is used as the tackifier (b), the value of van der Waals force component γₛ^{d} of the pressure-sensitive adhesive resin (A) tends to increase, and the upward tendency appears more significantly when being combined with the silylated urethane resin.

In a polymer having a structure with smaller intermolecular interaction, the value of van der Waals force component γₛ^{d} tends to decrease. In contrast, for example, by using a polymer having a structure with large intermolecular interaction, such as acrylic acid, the value of van der Waals force component γₛ^{d} tends to increase.

Therefore, in the case where the (meth)acrylic acid ester resin is used as the base resin (a), when the content of a structural unit derived from a carboxy group-containing monomer contained in all structural units of the (meth)acrylic acid ester resin exceeds 5.0 mass%, the value of van der Waals force component γₛ^{d} tends to increase.

From the viewpoint of adjusting the value of van der Waals force component γₛ^{d} to be within a predetermined range, the content of the structural unit derived from a carboxy group-containing monomer contained in all structural units of the (meth)acrylic acid ester resin is preferably 3.0 mass% or less, more preferably 2.5 mass% or less, and further preferably 2.0 mass% or less.

When there is interaction between specific functional groups in a polymer molecule, interaction between polymer molecules becomes relatively small, and the value of van der Waals force component γₛ^{d} tends to decrease.

For example, in the case where the (meth)acrylic acid ester resin containing a structural unit derived from a hydroxyl group-containing monomer is used as the base resin (a), since there is interaction between multiple hydroxyl groups in a polymer molecule, interaction between polymer molecules can be adjusted to be small, and the value of van der Waals force component γₛ^{d} tends to decrease.

Therefore, from the viewpoint of adjusting the value of van der Waals force component γₛ^{d} to be within a predetermined range, the content of the structural unit derived from a hydroxyl group-containing monomer contained in all structural units of the (meth)acrylic acid ester resin is preferably 0.1 to 30 mass%, more preferably 0.2 to 20 mass%, further preferably 3.0 to 10 mass%, and still further preferably 0.4 to 3 mass%.

In the case where the (meth)acrylic acid ester resin is used as the base resin (a), when being combined with a compound having good compatibility with the (meth)acrylic acid ester resin (for example, rosin-based resin or the like) as the tackifier (b), the value of van der Waals force component γₛ^{d} tends to increase.

In the case where the (meth)acrylic acid ester resin is used as the base resin (a), from the viewpoint of adjusting the value of van der Waals force component γₛ^{d} to be within a predetermined range, the content of the base resin (a) in the pressure-sensitive adhesive resin (A) is preferably 60 to 95 mass%, more preferably 65 to 90 mass%, and further preferably 70 to 85 mass%, and the content of the tackifier (b) is preferably 5 to 40 mass%, more preferably 10 to 35 mass%, and further preferably 15 to 30 mass%.

In the case where the silylated urethane resin is used as the base resin (a), when being combined with a compound having good compatibility with the silylated urethane resin (for example, terpene phenol-based resin or the like) as the tackifier (b), the value of van der Waals force component γₛ^{d} tends to decrease.

In the case where the silylated urethane resin is used as the base resin (a), from the viewpoint of adjusting the value of van der Waals force component γₛ^{d} to be within a predetermined range, the content of the base resin (a) in the pressure-sensitive adhesive resin (A) is preferably 40 to 70 mass%, more preferably 40 to 65 mass%, and further preferably 40 to 60 mass%, and the content of the tackifier (b) is preferably 30 to 60 mass%, more preferably 35 to 60 mass%, and further preferably 40 to 60 mass%.

Moreover, in the case where a resin having a molecular structure composed of only carbon and hydrogen, such as the polyisobutylene-based resin, is used as the base resin (a), since interaction between molecules is small, the value of van der Waals force component γₛ^{d} tends to decrease.

In addition, in the case where the polyisobutylene-based resin is used as the base resin (a), from the viewpoint of adjusting the value of van der Waals force component γₛ^{d} to be within a predetermined range, the above-described PIB-based resin (α1) and PIB-based resin (α2) having different weight-average molecular weights are preferably used in combination.

In addition, when adjusting the value of van der Waals force component γₛ^{d} to be within a predetermined range, the weight-average molecular weights of the PIB-based resin (α1) and the PIB-based resin (α2) used, and the preferred range of the blending ratio of the PIB-based resin (α1) to the PIB-based resin (α2) are as described above.

In the case where the polyisobutylene-based resin is used as the base resin (a), when being combined with a compound having good compatibility with the polyisobutylene-based resin (for example, hydrogenated petroleum resin or the like) as the tackifier (b), the value of van der Waals force component γₛ^{d} tends to decrease.

In the case where the polyisobutylene-based resin is used as the base resin (a), from the viewpoint of adjusting the value of van der Waals force component γₛ^{d} to be within a predetermined range, the content of the base resin (a) in the pressure-sensitive adhesive resin (A) is preferably 55 to 99 mass%, more preferably 65 to 97 mass%, and further preferably 75 to 95 mass%, and the content of the tackifier (b) is preferably 1 to 45 mass%, more preferably 3 to 35 mass%, and further preferably 5 to 25 mass%.

### [Base Material]

As described above, the pressure-sensitive adhesive sheet of the present invention may be a pressure-sensitive adhesive sheet having a base material.

The base material to be used is not particularly limited and arbitrarily selected depending on the intended use of the pressure-sensitive adhesive sheet, and may be a base material made of a conductive material such as metal or may be a base material made of an insulating material.

Since the pressure-sensitive adhesive layer itself in the pressure-sensitive adhesive sheet has excellent antistatic property and conductive property, the pressure-sensitive adhesive sheet of the present invention has excellent antistatic property and conductive property without using a base material made of a conductive material such as metal.

Therefore, from the viewpoint of capable of being used for various uses, the pressure-sensitive adhesive sheet of the present invention is preferably a pressure-sensitive adhesive sheet having a base material made of an insulating material.

Examples of the base material made of an insulating material include various paper such as high-quality paper, art paper, coated paper, glassine paper, and laminated paper obtained by laminating a thermoplastic resin such as polyethylene on these paper base materials; a porous material such as non-woven fabric; a plastic film or sheet made of polyolefin resins such as a polyethylene resin and a polypropylene resin, polyester resins such as a polybutylene terephthalate resin and a polyethylene terephthalate resin, an acetate resin, an ABS resin, a polystyrene resin, a vinyl chloride resin and the like; a plastic film or sheet made of a mixture of these resins; and a plastic film or sheet made of a laminated body of these plastic films or sheets.

It is to be noted that a base material sheet of the plastic film or sheet or the like may be unstretched, or stretched in a uniaxial direction or in a biaxial direction, such as longitudinal or transverse.

Moreover, the base material may further contain an ultraviolet absorbing agent, a light stabilizing agent, an antioxidizing agent, an antistatic agent, a slip agent, an antiblocking agent, a coloring agent and the like.

The thickness of the base material is not particularly limited, but from the viewpoint of ease of handling, it is preferably 10 to 250 µm, more preferably 15 to 200 µm, and further preferably 20 to 150 µm.

In the case where the base material is a plastic film or sheet, from the viewpoint of improving an adhesion property of the base material with the pressure-sensitive adhesive layer, the surface of the base material is preferably subjected to surface treatment such as an oxidation method and a roughening method, as necessary.

The oxidation method is not particularly limited, and examples thereof include a corona discharge treatment method, a plasma treatment method, chromium acid oxidation (wet type), flame treatment, hot-air treatment, and ozone/ultraviolet irradiation treatment. Moreover, the roughening method is not particularly limited, and examples thereof include a sandblast method and a solvent treatment method. The surface treatment is arbitrarily selected depending on the kind of the base material, and from the viewpoints of an improving effect of an adhesion property with the pressure-sensitive adhesive layer and handleability, a corona discharge treatment method is preferable. Furthermore, primer treatment can also be performed.

### [Release Member]

Moreover, the pressure-sensitive adhesive sheet of the present invention may be a pressure-sensitive adhesive sheet not having a base material, as described above. That is, since the pressure-sensitive adhesive layer itself in the pressure-sensitive adhesive sheet of the present invention has excellent antistatic property and conductive property, even a pressure-sensitive adhesive sheet without a base material has excellent antistatic property and conductive property without using a base material made of a conductive material such as metal.

In the pressure-sensitive adhesive sheet without a base material, a release member is used in place of the above-described base material, and the release member is removed when using the pressure-sensitive adhesive sheet.

As the release member, a release sheet whose both surfaces are subjected to peeling treatment and a release sheet whose one surface is subjected to peeling treatment are used, and examples thereof include one in which a peeling agent is applied on a base material for a release member.

Examples of the base material for a release member include paper base materials such as glassine paper, coated paper, and high-quality paper, laminated paper obtained by laminating a thermoplastic resin such as polyethylene on these paper base materials, or plastic films such as polyester resin films made of a polyethylene terephthalate resin, a polybutylene terephthalate resin, a polyethylene naphthalate resin and the like, and polyolefin resin films made of a polypropylene resin, a polyethylene resin and the like.

Examples of the peeling agent include rubber-based elastomers such as a silicone-based resin, an olefin-based resin, an isoprene-based resin, and a butadiene-based resin, a long-chain alkyl-based resin, an alkyd-based resin, and a fluorine-based resin.

The thickness of the release member is not particularly limited, but it is preferably 10 to 200 µm, and more preferably 25 to 150 µm.

### [Manufacturing Method of Pressure-Sensitive Adhesive Sheet]

A manufacturing method of the pressure-sensitive adhesive sheet is not particularly limited, and the pressure-sensitive adhesive sheet can be manufactured by a known method. Examples thereof include a method in which the solution of the pressure-sensitive adhesive composition, in which the above-described organic solvent is blended, is manufactured by a known applying method.

Examples of the applying method include a spin coat method, a spray coat method, a bar coat method, a knife coat method, a roll coat method, a blade coat method, a die coat method, and a gravure coat method.

As specific manufacturing methods, examples of the manufacturing method of the pressure-sensitive adhesive sheet 1a in which the pressure-sensitive adhesive layer 12 is formed on the base material 11 as in Figure 1(a) include a manufacturing method in which the solution of the pressure-sensitive adhesive composition is directly applied on one surface of the base material 11 and dried to form the pressure-sensitive adhesive layer 12, and a manufacturing method in which one release member of the pressure-sensitive adhesive sheet 1d described below, which is manufactured using the solution of the pressure-sensitive adhesive composition in advance, is removed and one surface of the base material 11 and the pressure-sensitive adhesive layer 12 are bonded.

Moreover, examples of the manufacturing method of the pressure-sensitive adhesive sheet 1b in which the pressure-sensitive adhesive layers 12, 12' are formed on both surfaces of the base material 11 as in Figure 1(b) include a manufacturing method in which the solution of the pressure-sensitive adhesive composition is directly applied on each of the both surfaces of the base material and dried to form the pressure-sensitive adhesive layers 12, 12', and a manufacturing method in which one release member of the pressure-sensitive adhesive sheet 1d described below, which is manufactured in advance, is removed, one surface of the base material 11 and the pressure-sensitive adhesive layer are bonded, and the solution of the pressure-sensitive adhesive composition is directly applied on the other surface of the base material 11 and dried to form the pressure-sensitive adhesive layer.

Furthermore, examples of the manufacturing method of the pressure-sensitive adhesive sheet 1c in which the release member 13 is laminated on the pressure-sensitive adhesive layer 12 formed on the base material 11 as in Figure 1(c) include a manufacturing method in which the surface of the pressure-sensitive adhesive layer 12 of the above-described pressure-sensitive adhesive sheet 1a and the release member 13 are bonded, and a manufacturing method in which the solution of the pressure-sensitive adhesive composition is directly applied on a peeling-treated surface of the release member 13 and dried to form the pressure-sensitive adhesive layer 12, and then, the pressure-sensitive adhesive layer 12 and the base material 11 are bonded.

In addition, examples of the manufacturing method of the pressure-sensitive adhesive sheet 1d in which the pressure-sensitive adhesive layer 12 is sandwiched between the release members 13, 13' not using a base material as in Figure 1(d) include a manufacturing method in which the solution of the pressure-sensitive adhesive composition is directly applied on a peeling-treated surface of the release member 13 and dried to form the pressure-sensitive adhesive layer 12, and then, the pressure-sensitive adhesive layer 12 and the release member 13' are bonded, and a manufacturing method in which the solution of the pressure-sensitive adhesive composition is directly applied on one surface of the release member whose both surfaces are peeling-treated, and dried to form the pressure-sensitive adhesive layer, and then, it is wound in a roll shape to be a one-layer tape-shaped two-sided pressure-sensitive adhesive tape not having a base material. In addition, as described above, the peel force of the release member 13 and that of the release member 13' are preferably adjusted to be different.

The solid content concentration of the solution of the pressure-sensitive adhesive composition when the organic solvent is blended is preferably 10 to 60 mass%, more preferably 12 to 45 mass%, and further preferably 15 to 30 mass%.

Moreover, after applying the solution obtained by dissolving the pressure-sensitive adhesive composition in the organic solvent on the base material or the release layer surface of the release member, heating at a temperature of 80 to 150°C for 30 seconds to 5 minutes is preferably performed.

### [Physical Properties of Pressure-Sensitive Adhesive Sheet]

The pressure-sensitive adhesive sheet of the present invention has excellent adhesive force, has low surface resistivity of the pressure-sensitive adhesive layer, and excels in an antistatic property and a conductive property.

The surface resistivity of the pressure-sensitive adhesive layer of the pressure-sensitive adhesive sheet of the present invention is preferably 9.0×10⁵ Ω/□ or less, more preferably 6.0□10⁵ Ω/□ or less, more preferably 5.0×10⁵ Ω/□ or less, further preferably 1.0×10⁵ Ω/□ or less, further preferably 7.0×10⁴ Ω/□ or less, and still further preferably 5.0×10⁴ Ω/□ or less.

It is to be noted that the above-described value of the surface resistivity of the pressure-sensitive adhesive layer indicates a value measured by a method described in Examples.

Moreover, the adhesive force of the pressure-sensitive adhesive sheet of the present invention when the adherend is stainless is preferably 2.0 N/25 mm or more, more preferably 5.0 N/25 mm or more, more preferably 10.0 N/25 mm or more, further preferably 12.0 N/25 mm or more, and still further preferably 17.0 N/25 mm or more.

It is to be noted that the above-described adhesive force of the pressure-sensitive adhesive sheet indicates a value measured by a method described in Examples.

### Examples

Regarding the following physical properties of components used in Examples and Comparative Examples below, values measured by methods described below were used.

### <Fiber Diameter, Average Length, and Aspect Ratio of Carbon Nanotube>

These are values measured by observing a carbon nanotube using a scanning electronic microscope (manufactured by Hitachi High-Technologies Corporation, product name "S-4700").

### <Weight-Average Molecular Weight (Mw)>

A value in terms of standard polystyrene, which was measured using a gel permeation chromatograph apparatus (manufactured by Tosoh Corporation, product name "HLC-8020") under the following conditions, was used.

### (Measurement Conditions)

- Column: "TSK guard column HXL-H" "TSK gel GMHXL (x2)" "TSK gel G2000HXL" (all manufactured by Tosoh Corporation)
- Column Temperature: 40°C
- Developing Solvent: Tetrahydrofuran
- Flow Rate: 1.0 mL/min

### <Softening Point>

Regarding the softening point of the tackifier (b), a value measured in conformity with JIS K 2531 was used.

### (Manufacturing Example 1: Preparation of Carbon Nanotube Dispersion Liquid (1))

A multi-walled carbon nanotube (manufactured by Filgen, Inc., product name "F-M-ML-1/25", fiber diameter: 10 nm, length: 5 to 15 µm, aspect ratio: 500 to 1500) that is a conductive material was added to ethyl acetate, and dispersed in the ethyl acetate by application of ultrasonic vibration with an ultrasonic bath (42 kHz, 125 W) for 1 hour to prepare a carbon nanotube dispersion liquid (1) having a concentration of the multi-walled carbon nanotube of 0.3 mass%.

### (Manufacturing Example 2: Preparation of Carbon Nanotube Dispersion Liquid (2))

A multi-walled carbon nanotube (manufactured by Ube Industries, Ltd, product name "AMC", fiber diameter: 5 to 15 nm, length: 1 to 1.5 µm, aspect ratio: 67 to 300) that is a conductive material was added to ethyl acetate, and dispersed in the ethyl acetate by application of ultrasonic vibration with an ultrasonic bath (42 kHz, 125 W) for 1 hour to prepare a carbon nanotube dispersion liquid (2) having a concentration of the multi-walled carbon nanotube of 0.3 mass%.

### (Example 1)

### (1) Preparation of Pressure-Sensitive Adhesive Composition

80.0 parts by mass (solid content ratio) of "acrylic acid ester resin (1) (n-butyl acrylate (BA)/methyl methacrylate (MMA)/vinyl acetate (VAc)/2-hydroxyethyl acrylate (2HEA)=80.0/10.0/9.0/1.0 (mass ratio), weight-average molecular weight: 1,000,000, solvent: ethyl acetate, solid content concentration: 15 mass%)" as the base resin (a) was blended, and furthermore, 20.0 parts by mass (solid content ratio) of a rosin-based resin "KE-359" (product name, manufactured by Arakawa Chemical Industries, Ltd., softening point: 94 to 104°C, solid content concentration: 50 mass%) as the tackifier (b) was blended and mixed to prepare an ethyl acetate solution of a pressure-sensitive adhesive resin.

Next, 1.35 parts by mass (solid content ratio) of an isocyanate-based cross-linking agent "BXX5640" (product name, manufactured by Toyo Ink Co., Ltd.) as the cross-linking agent was blended with respect to 100 parts by mass of the solid content of the solution of a pressure-sensitive adhesive resin, and furthermore, 1.0 part by mass (solid content ratio) of the carbon nanotube dispersion liquid (1) prepared in Manufacturing Example 1 described above was blended, mixed, and uniformly stirred to prepare an ethyl acetate solution of a pressure-sensitive adhesive composition.

### (2) Manufacture of Pressure-Sensitive Adhesive Sheet

The prepared ethyl acetate solution of a pressure-sensitive adhesive composition was applied on one surface of a base material made of a polyethylene terephthalate resin and having a thickness of 50 µm such that the film thickness after drying is 25 µm to form an applied film, and the applied film was dried to manufacture a pressure-sensitive adhesive sheet.

### (Examples 2 to 8, Comparative Examples 1 to 6)

An ethyl acetate solution of a pressure-sensitive adhesive composition was prepared, and a pressure-sensitive adhesive sheet was manufactured using the solution in the same manner as Example 1 except that the kind and/or the amount blended of each component in the pressure-sensitive adhesive composition were changed as shown in Table 2. It is to be noted that the amount blended in Table 2 is represented by the solid content ratio.

Moreover, each component used in each of Examples and Comparative Examples is as follows.

### <Base Resin (a)>

- Acrylic acid ester resin (2): n-butyl acrylate (BA)/acrylic acid (AA)=98.0/2.0 (mass ratio), weight-average molecular weight: 1,000,000, solvent: ethyl acetate, solid content concentration: 15 mass%.
- Acrylic acid ester resin (3): n-butyl acrylate (BA)/acrylic acid (AA)=90.0/10.0 (mass ratio), weight-average molecular weight: 700,000, solvent: ethyl acetate, solid content concentration: 33.6 mass%.
- Acrylic acid ester resin (4): n-butyl acrylate (BA)/acrylic acid (AA)=95.0/5.0 (mass ratio), weight-average molecular weight: 700,000, solvent: ethyl acetate, solid content concentration: 40 mass%.
- Acrylic acid ester resin (5): n-butyl acrylate (BA)/acrylic acid (AA)=80.0/20.0 (mass ratio), weight-average molecular weight: 700,000, solvent: ethyl acetate, solid content concentration: 33.6 mass%.
- Acrylic acid ester resin (6): n-butyl acrylate (BA)/methyl acrylate (MA)/acryloylmorpholine (ACMO)/2-hydroxyethyl acrylate (2HEA)=83.0/2.0/14.0/1.0 (mass ratio), weight-average molecular weight: 650,000, solvent: ethyl acetate, solid content concentration: 35 mass%.
- Silylated urethane resin (1): polyoxypropylene diol/isophorone diisocyanate/N-aminoethyl-γ-aminopropylmethyl dimethoxysilane/methyl acrylate=93.7/2.3/2.2/1.8 (mass ratio), weight-average molecular weight: 50,000, solvent: ethyl acetate, solid content concentration: 70 mass%.
- Styrene-block-(ethylene-co-butene)-block-styrene triblock copolymer (SEBS) resin (1): manufactured by Shell Chemicals, product name "Kraton G1657", styrene content: 13 mass%, weight-average molecular weight: 150,000, solvent: ethyl acetate, solid content concentration: 30 mass%.
- Polyisobutylene-based resin (1): mixture of polyisobutylene-based resin of Oppanol B50 (product name, manufactured by BASF, polyisobutylene-based resin having weight-average molecular weight of 340,000)/Oppanol B30 (product name, manufactured by BASF, polyisobutylene-based resin having weight-average molecular weight of 200,000)=100/10 (mass ratio), solvent: toluene, solid content concentration: 20 mass%.

### <Tackifier (b) >

- Rosin-based resin "HARIESTER TF": product name, manufactured by Harima Chemicals Group, Inc., softening point: 75 to 85°C.
- Rosin-based resin "KE-359": manufactured by Arakawa Chemical Industries, Ltd., product name, softening point: 94 to 104°C, solid content concentration: 50 mass%.
- Terpene phenol-based resin "YS Polyster T130": product name, manufactured by YASUHARA CHEMICAL Co., Ltd., softening point: 130°C.
- Terpene phenol-based resin "YS Polyster S145": product name, manufactured by YASUHARA CHEMICAL Co., Ltd., terpene phenol copolymer, softening point: 145°C.
- Terpene phenol-based resin "YS Polyster G125": product name, manufactured by YASUHARA CHEMICAL Co., Ltd., terpene phenol copolymer, softening point: 125°C.
- Partially hydrogenated terpene phenol-based resin "YS Polyster TH130": product name, manufactured by YASUHARA CHEMICAL Co., Ltd., softening point: 130°C.
- Hydrogenated petroleum resin "ARKON P-125": product name, manufactured by Arakawa Chemical Industries, Ltd., softening point: 125°C.

### <Cross-Linking Agent>

- Isocyanate-based cross-linking agent "CORONATE L": product name, manufactured by Nippon Polyurethane Industry Co., Ltd., solid content concentration: 75 mass%.
- Isocyanate-based cross-linking agent "BXX5640": product name, manufactured by Toyo Ink Co., Ltd.

### <Catalyst>

- Titanium chelate-based catalyst "ORGATIX TC-100": product name, manufactured by Matsumoto Fine Chemical Co., Ltd.

### <Conductive Material (B)>

- Carbon nanotube dispersion liquid (1): carbon nanotube dispersion liquid prepared in Manufacturing Example 1.
- Carbon nanotube dispersion liquid (2): carbon nanotube dispersion liquid prepared in Manufacturing Example 2.

The following physical properties of the pressure-sensitive adhesive resins and pressure-sensitive adhesive sheets prepared and manufactured in Examples and Comparative Examples were calculated or measured by methods described below. The results are shown in Table 1.

### (1) Value of van der Waals Force Component γₛ^{d} of Surface Free Energy of Pressure-Sensitive Adhesive Resin

A test sample obtained by forming only the pressure-sensitive adhesive composition not containing the conductive material (B) and containing other components into a sheet shape was formed, three kinds of solvents (pure water, diiodomethane, and 1-bromonaphthalene) were dropped onto the surface of the test sample after a lapse of three hours from the formation, a static contact angle of the test sample after 3 seconds for each of pure water, diiodomethane, and 1-bromonaphthalene was measured using an automatic contact angle meter (manufactured by Kyowa Interface Science Co., LTD., product name "DM-701"), and the value of van der Waals force component γₛ^{d} of surface free energy γₛ^{total} of the pressure-sensitive adhesive resin was calculated by the Kitazaki-Hata method based on the measured value.

### (2) Surface Resistivity of Pressure-Sensitive Adhesive Layer

One obtained by cutting the manufactured pressure-sensitive adhesive sheet into 20 mmx40 mm was used as a test piece.

The test piece was left for 24 hours under the environment at 23°C and 50% RH (relative humidity), and then, the surface resistivity of the pressure-sensitive adhesive layer of the pressure-sensitive adhesive sheet was measured in conformity with JIS-K7194 using a low-resistivity meter (manufactured by Mitsubishi Chemical Analytech Co., Ltd., product name "Loresta GP MCP-T610").

It is to be noted that the measurement was performed three times, and the average value of the three measured values is described in Table 1.

### (3) Adhesive Force of Pressure-Sensitive Adhesive Sheet

One obtained by cutting the manufactured pressure-sensitive adhesive sheet into 25 mmx300 mm was used as a test piece.

The test piece was bonded to a stainless plate (SUS304, #360 polished) under the environment at 23°C and 50% RH (relative humidity) and left for 24 hours under the same environment, and then, the adhesive force of the pressure-sensitive adhesive sheet was measured by the 180° peeling method based on JIS Z0237:2000, at a tension rate of 300 mm/min.

**[Table 2]**

| | Pressure-Sensitive Aanesive Resin (A) | | | | | | Conductive Material (B) | | Content of (B) Component with respect to 100 parts by mass of (A) Component | van der Waals Force Component γₛ^{d} of Pressure-Sensitive Adhesive Component excluding (B) Component | Surface Resistivity (Ω□) | Adhesive Force (N/25 mm) |
|---|---|---|---|---|---|---|---|---|---|---|---|---|
| | Base Resin (a) | | Tackifier (b) | | Cross-Linking Agent/Catalyst | | Carbon Nanomaterial | | | | | |
| | Kind | Amount Blended^{*1} (parts by mass) | Kind | Amount Blended^{*1} (parts by mass) | Kind | Amount Blended^{*1} (parts by mass) | Kind | Amount Blended^{*2} (parts by mass) | | | | |
| Example 1 | Acrylic Acid Ester Resin (1) (BA/MMA/VAc/2HEA =80.0/10.0/9.0/1.0) | 80.0 | Rosin-Based Resin (KE-359) | 20.0 | Isocyanate-Based Cross-Linking Agent (BXX5640) | 1.35 | Multi-Walled Carbon Nanotube Dispersion Liquid (1) | 1.0 | 0.99 | 17.5 | 3.0×10⁴ | 13.85 |
| Example 2 | Acrylic Acid Ester Resin (2) (BA/AA=98.0/2.0) | 66.7 | Rosin-Based Resin (HARIESTER TF) | 33.3 | Isocyanate-Based Cross-Linking Agent (CORONATE L) | 0.06 | Multi-Walled Carbon Nanotube Dispersion Liquid (1) | 1.0 | 1.00 | 23.5 | 5.7×10⁴ | 20.90 |
| Example 3 | Silylated Urethane Resin (1) | 50.0 | Terpene Phenol-Based Resin (YS Polyster T130) | 50.0 | Titanium Chelate-Based Catalyst (ORGATIX TC-100) | 0.92 | Multi-Walled Carbon Nanotube Dispersion Liquid (1) | 1.0 | 0.99 | 24.4 | 6.2×10⁴ | 18.85 |
| Example 4 | Silylated Urethane Resin (1) | 50.0 | Terpene Phenol-Based Resin (YS Polyster S145) | 50.0 | Titanium Chelate-Based Catalyst (ORGATIX TC-100) | 0.92 | Multi-Walled Carbon Nanotube Dispersion Liquid(1) | 1.0 | 0.99 | 22.6 | 2.9×10⁴ | 19.25 |
| Example 5 | Silylated Urethane Resin (1) | 50.0 | Terpene Phenol-Based Resin (YS Polyster G125) | 50.0 | Titanium Chelate-Based Catalyst (ORGATIX TC-100) | 0.92 | Multi-Walled Carbon Nanotube Dispersion Liquid (1) | 1.0 | 0.99 | 21.7 | 6.6×10⁴ | 22.40 |
| Example 6 | Silylated Urethane Resin (1) | 50.0 | Terpene Phenol-Based Resin (YS Polyster S125) | 50.0 | Titanium Chelate-Based Catalyst (ORGATIX TC-100) | 0.92 | Multi-Walled Carbon Nanotube Dispersion Liquid (2) | 8.0 | 7.93 | 22.6 | 1.6×10⁵ | 14.75 |
| Example 7 | Polyisobutylene-Based Resin (1) | 90.9 | Hydrogenated Petroleum Resin (ARKON P-125) | 9.1 | - | - | Multi-Walled Carbon Nanotube Dispersion Liquid (1) | 1.0 | 1.00 | 25.2 | 6.5×10⁵ | 2.50 |
| Example 8 | Acrylic Acid Ester Resin (6) (BA/MA/ACMO/2HEA =83.0/20/14.0/1.0) | 100.0 | - | - | Isocyanate-Based Cross-Linking Agent (BXX5640) | 1.80 | Multi-Walled Carbon Nanotube Dispersion Liquid (1) | 1.0 | 0.98 | 13.5 | 5.6×10⁵ | 7.50 |
| Comparative Example 1 | Acrylic Acid Ester Resin (3) (BA/AA=90.0/10.0) | 100.0 | - | - | Isocyanato-Based Cross-Linking Agent (CORONATE L) | 1.11 | Multi-Walled Carbon Nanotube Dispersion Liquid (1) | 1.0 | 0.99 | 27.5 | 1.8×10⁶ | 22.45 |
| Comparative Example 2 | Acrylic Acid Ester Resin (4) (BA/AA=95.0/5.0) | 100.0 | - | - | Isocyanate-Based Cross-Linking Agent (CORONATE L) | 2.00 | Multi-Walled Carbon Nanotube Dispersion Liquid (1) | 1.0 | 0.98 | 26.6 | 1.1×10⁶ | 3.50 |
| Comparative Example 3 | Acrylic Acid Ester Resin (5) (BA/AA=80.0/20.0) | 100.0 | - | - | Isocyanate-Based Cross-Linking Agent (CORONATE L) | 2.30 | Multi-Walled Carbon Nanotube Dispersion Liquid (1) | 1.0 | 0.98 | 31.2 | 6.5×10⁷ | *3 |
| Comparative Example 4 | Silylated Urethane Resin (1) | 50.0 | Resin-Based Resin (KE-359) | 50.0 | Titanium Chelate-Based Catalyst (ORGATIX TC-100) | 0.92 | Multi-Walled Carbon Nanotube Dispersion Liquid (1) | 1.0 | 0.99 | 32.9 | 8.7×10⁶ | 9.35 |
| Comparative Example 5 | Silylated Urethane Resin (1) | 50.0 | Partially Hydrogenated Terpene Phenol-Based Resin (YS Polyster TH130) | 50.0 | Titanium Chelate-Based Catalyst (ORGATIX TC-100) | 0.92 | Multi-Walled Carbon Nanotube Dispersion Liquid (1) | 1.0 | 0.99 | 30.6 | 3.3×10⁶ | 17.50 |
| Comparative Example 6 | SEBS Resin (1) | 50.0 | Partially Hydrogenated Terpene Phenol-Based Resin (YS Polyster TH130) | 50.0 | - | - | Multi-Walled Carbon Nanotube Dispersion Liquid (1) | 1.0 | 1.00 | 27.2 | 3.5×10⁶ | 0.50 |

| | | | | | | | | | | | | |
|---|---|---|---|---|---|---|---|---|---|---|---|---|
| *1 Solid Content Ratio *2 Solid Content Ratio with respect to 100 parts by mass of Solid Content of Solution of Pressure-Sensitive Adhesive Resin (A) *3 The measurement could not be performed because the pressure-sensitive adhesive layer of the pressure-sensitive adhesive sheet was transferred to the stainless plate. | | | | | | | | | | | | |

According to Table 1, in the pressure-sensitive adhesive sheets of Examples 1 to 8, since the pressure-sensitive adhesive resin having the value of van der Waals force component γₛ^{d} of the pressure-sensitive adhesive composition excluding the (B) component of 26.0 or less was used, the surface resistivity of the pressure-sensitive adhesive layer was low and the adhesive force was good.

In contrast, in the pressure-sensitive adhesive sheets of Comparative Examples 1 to 6, since the value of van der Waals force component γₛ^{d} of the pressure-sensitive adhesive composition excluding the (B) component exceeds 26.0, the surface resistivity of the pressure-sensitive adhesive layer was high, and furthermore, the pressure-sensitive adhesive sheet of Comparative Example 6 resulted in poor adhesive force. It is to be noted that, in the pressure-sensitive adhesive sheet of Comparative Example 3, the pressure-sensitive adhesive layer of the pressure-sensitive adhesive sheet was transferred to the stainless plate as an adherent during the measurement of the adhesive force, and the measurement of the adhesive force could not be performed.

### Industrial Applicability

The pressure-sensitive adhesive sheet of the present invention has excellent adhesive force, has low surface resistivity of the pressure-sensitive adhesive layer, and excels in an antistatic property and a conductive property. Therefore, the pressure-sensitive adhesive sheet of the present invention is suitable as a bonding member used for members such as an electromagnetic shielding member of a container that houses electronic devices such as a computer and a communication device, an earthing conductor of an electric component or the like, and furthermore, a member for preventing ignition due to a spark generated from static electricity of friction electricity or the like.

### Reference Signs List

- 1, 1a, 1b, 1c, 1d: pressure-sensitive adhesive sheet
- 11: base material
- 12, 12': pressure-sensitive adhesive layer
- 13, 13': release member

## Claims

1. A pressure-sensitive adhesive sheet having a pressure-sensitive adhesive layer made of a pressure-sensitive adhesive composition containing a pressure-sensitive adhesive resin (A) and a conductive material (B), wherein a value of van der Waals force component γₛ^{d} of surface free energy of the pressure-sensitive adhesive composition excluding the conductive material (B) is 26.0 or less.

2. The pressure-sensitive adhesive sheet according to claim 1, wherein the pressure-sensitive adhesive sheet is a pressure-sensitive adhesive sheet without a base material, or a pressure-sensitive adhesive sheet having a base material made of an insulating material.

3. The pressure-sensitive adhesive sheet according to claim 1 or 2, wherein the pressure-sensitive adhesive resin (A) contains one or more resins selected from the group consisting of a (meth)acrylic acid ester resin, a silylated urethane resin, a styrene-isoprene-styrene copolymer (SIS) resin, a styrene-butadiene-styrene copolymer (SBS) resin, a styrene-block-(ethylene-co-butene)-block-styrene triblock copolymer (SEBS) resin, and a polyisobutylene-based resin, as a base compound resin (a).

4. The pressure-sensitive adhesive sheet according to claim 3, wherein the pressure-sensitive adhesive resin (A) contains the (meth)acrylic acid ester resin as the base resin (a), and a content of a structural unit derived from a carboxy group-containing monomer contained in all structural units of the (meth)acrylic acid ester resin is 3.0 mass% or less.

5. The pressure-sensitive adhesive sheet according to any one of claims 1 to 4, wherein the pressure-sensitive adhesive resin (A) further contains a tackifier (b).

6. The pressure-sensitive adhesive sheet according to claim 5, wherein the tackifier (b) contains one or more selected from rosin-based resins, terpene-based resins excluding partially hydrogenated terpene-based resins, and hydrogenated petroleum resins.

7. The pressure-sensitive adhesive sheet according to any one of claims 1 to 6, wherein the pressure-sensitive adhesive resin (A) contains the (meth)acrylic acid ester resin as the base resin (a), and a content of a structural unit derived from a hydroxyl group-containing monomer contained in all structural units of the (meth)acrylic acid ester resin is 0.1 to 30 mass%.

8. The pressure-sensitive adhesive sheet according to any one of claims 1 to 7, wherein the conductive material (B) is a carbon nanomaterial having a diameter of 1 to 1,000 nm and a length of 10 nm to 200 µm.

9. The pressure-sensitive adhesive sheet according to any one of claims 1 to 8, wherein a content of the conductive material (B) in the pressure-sensitive adhesive composition is 0.05 to 15 parts by mass with respect to 100 parts by mass of the pressure-sensitive adhesive resin (A).
